# EUROPEAN PATENT SPECIFICATION

(11) **EP 4 424 455 B1**
(45) Date of publication and mention of the grant of the patent: **24.06.2026**
(21) Application number: 23305263.8
(22) Date of filing: 28.02.2023
(51) Int. Cl.: B23K 26/70, B23K 37/006

(54) **OPTICAL SYSTEM**
OPTISCHES SYSTEM
SYSTÈME OPTIQUE

(43) Date of publication of application: 04.09.2024
(73) Proprietor: Laser Systems & Solutions of Europe, 92230 Gennevilliers (FR)
(72) Inventor: BOUKSOU, Yacine, 95170 Deuil la Barre (FR); TUBIANA, Vincent, 93160 Noisy le Grand (FR); THEBAULT, Guillaume, 92230 Gennevilliers (FR); HUARD, Jean-Louis, 95490 Vauréal (FR)
(74) Representative: Jacobacci & Partners France

(56) References cited:
- CN-A- 113 681 173
- CN-U- 210 115 591
- US-A1- 2021 346 985

## Description

### TECHNICAL FIELD OF THE INVENTION

The invention relates to the field of laser protection devices.

More precisely the invention relates to an optical system comprising a casing in which a laser source and at least one optical component are mounted.

### BACKGROUND INFORMATION AND PRIOR ART

Laser sources concentrate a high power in a minimum volume. Optical systems which comprise such laser sources represent a real danger for people if the area is not secured. Indeed, the optical system (in which the laser beam propagates) can be opened without cutting off the laser source, thus exposing people present there (and who are not necessarily equipped with safety equipment). This situation for example occurs during maintenance activities of such optical systems.

Therefore, although, it is well-known to use walls or shields to protect people performing the operation linked with the laser source (with walls, shields or specific equipment), the safety of nearby people (who are not involved in the operation) is usually overlooked.

For that purpose, it is for example known to use a removable laser protection device (such as temporary curtain) which is placed around the optical system when it is known that the optical system will be opened with a risk of propagation of the laser beam outside of the optical system.

However, such a removable laser protection device does not prevent laser beam reflections on the ceiling. Furthermore, in practice, such a removable laser protection device is not often used because it is usually stored in a different location from the system itself (and people do not necessarily take the time to look for it).

Another embodiment can be to place the optical system in a specific room. However, it is not always possible to monopolize a specific room for one optical device.

It is also known to build a shell-like structure around the optical system in order to isolate the optical system from the rest of the room. This structure comprises side walls and upper wall. It includes wheels in order to encapsulate the optical system. The laser beam cannot propagate outside of the structure.

However, such a structure requires a rigorous positioning in order avoid the propagation of the laser beam outside of the optical system. Furthermore, this structure is particularly cumbersome.

It is known from document CN113681173A, a touch screen cutting device. It is also known from document CN210115591U, a laser cutting machine for cutting FPC board stickers.

### SUMMARY OF THE INVENTION

Therefore, one object of the invention is to provide a compact optical system with a structure allowing safe operation and maintenance.

The invention consists in an optical system as claimed in claim 1. The optical system comprises:
- a base support,
- a laser source emitting a laser beam, said laser source being mounted on the base support,
- at least one optical component mounted on the base support and receiving the laser beam, and
- a casing comprising a first part and a second part, said first part being fixed to the base support, the first part comprising a first front wall bordered by a portion of a first side wall, the first front wall facing a support plate of the base support, the second part comprising a second front wall bordered by a portion of a second side wall, the second front wall extending parallel to the first front wall, the portion of the second side wall being arranged in the extension of the portion of the first side wall,
   the first part delimiting a compartment in which the laser beam propagates,
   the second part comprising an access opening facing the second front wall, said access opening being arranged in order to allow access to the compartment. The second part of the casing is fixed to the first part by means of rails so as to allow a sliding movement of the second part with respect to the first part between an operating position and a maintenance position.

Thanks to the invention, the first access opening enables accessing to the compartment without requiring disassembly operations of the optical system, in safety conditions for the people working in the vicinity. For example, an operator can use the first access opening to get access to the compartment, and for example implement maintenance operations.

Thanks to the specific structure of the casing, the maintenance operations can be performed in complete safety, even if the optical system comprises a laser source. Indeed, thanks to the access opening, it is possible to easily access inside the optical system in order to perform tests and maintenance operations without exposing people present near the optical system.

Other advantageous and non-limiting features of the optical system according to the invention include:
- the access opening extends parallel to the support plate of the base support;
- the second part is mounted movable with respect to the first part;
- the optical system further comprises a display and control unit placed in the compartment;
- another portion of the second side wall is mounted on the second front wall by means of hinges in order to allow the rotation of the other portion of the second side wall from a predetermined angle;
- the predetermined angle is comprised between 25 and 40 degrees;
- the first part is made of steel;
- the second part is made of aluminum;
- the casing comprises a third part comprising a third front wall bordered by a portion of a third side wall, the third front wall extending parallel to the first front wall, the portion of the third side wall being arranged in the extension of the portion of the first side wall,

the third part also delimiting said compartment,
the third part comprising another access opening facing the third front wall, said other access opening being arranged in order to allow access to the compartment;
   - the third part is mounted movable with respect to the first part;
   - the third part of the casing is fixed to the first part by means of rails so as to allows a sliding movement of the third part with respect to the first part;
   - the third part is mounted movable with respect to the second part;
   - the third part of the casing is fixed to the second part by means of rails so as to allows a sliding movement of the third part with respect to the second part;
   - the third part is made of aluminum; and
   - the first part is screwed to the base support.

### DETAILED DESCRIPTION OF EXAMPLE(S)

The optical system according to the invention will be described next, in reference with the appended drawings.

On the appended drawings:
- Figure 1 is a schematic view of an example of an optical system according to the present invention;
- Figure 2 is a schematic view in front perspective of a first embodiment of a casing comprised on the optical system according to the present invention;
- Figure 3 is a schematic view in rear perspective of the first embodiment of the casing of Figure 2;
- Figure 4 is another schematic view in front perspective of the first embodiment of the casing of Figure 2;
- Figure 5 is a first schematic view in front perspective of a second embodiment of the casing comprised on the optical system according to the present invention;
- Figure 6 is a second schematic view in front perspective of the second embodiment of the casing of Figure 5;
- Figure 7 is a third schematic view in front perspective of the second embodiment of the casing of Figure 5;
- Figure 8 is a schematic view in rear perspective of the second embodiment of the casing of Figure 7; and
- Figure 9 is a fourth schematic view in front perspective of the second embodiment of the casing of Figure 5.

In the following, the terms "front" and "back/rear" are defined relatively to the floor which bears the optical system. Therefore, the back or rear part of an element correspond to the part of this element which faces the floor whereas the front part refers to the part opposite to this back or rear part. In other words, the back or rear part is positioned between the front part of the concerned element and the floor.

The present invention aims at enabling the safe use of optical systems, especially optical systems comprising laser sources.

In the present description, the wording "optical system" refers to a device configured to implement a process which includes a laser source.

As an example, the optical system can be used to perform a thermal annealing process on the surface of a semiconductor wafer.

The optical system could be also a system that engraves the surface of substrate. It could also be a system that dices the sample. It could also be a system that welds two parts together. In all those examples, an optical system is usually required to transport the laser beam and provide the right characteristics for the process. The elements allowing the transportation and the laser beam shaping require maintenance and servicing. In all situations where a laser beam is required, the present invention is of interest to protect the personal working in the vicinity.

Indeed, during the lifetime of the optical system, it is usual for the laser beam characteristics to evolve. In that case, it is necessary to readjust the features of the laser beam. The failure of a component also happens, and the latter needs to be replaced. In that case, an optical alignment is necessary.

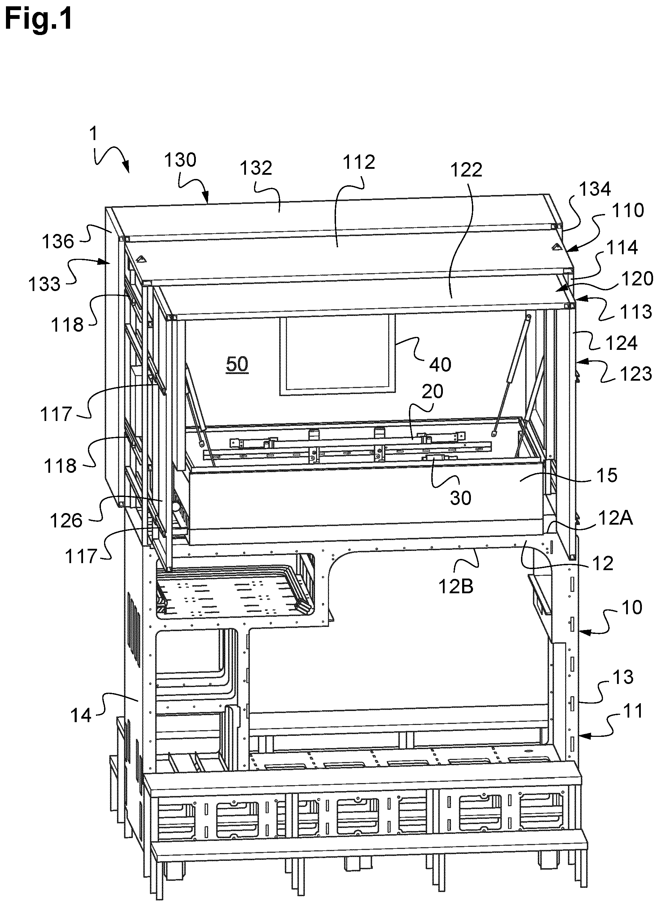

In these examples, it is required to have a laser beam going through all the elements of the optical system while an operator directly actions the elements that drive the adjustment. The operator, who is operating, is trained and uses personal protection equipment, such as laser safety glasses and gloves. However, the people working on the surrounding area, for example on a totally different tool located a few meters away, are not necessarily trained for laser safety and usually do not wear a suitable protective equipment
For that purpose, the present invention allows, for example, the implementation of system maintenance operations in complete safety, especially for the people working in the vicinity of the optical system (but outside of this optical system). More particularly, the invention relates to an optical system 1, as represented in Figure 1, with a structure allowing safe operation and maintenance.

As visible in Figure 1, the optical system 1 comprises a base support 10 and a casing 100 positioned on the base support 10 so as to delimit a compartment 50.

The base support 10 is a conventional structure support which comprises a frame 11, here to rest on the floor. The frame 11 comprises here a support plate 12 and two mounts 13, 14 which extend between a rear face 12B of the support plate 12 and the floor. As an alternative, the base support can present any structure to support different elements and the casing.

Here, the base support 10 is made of a metallic material. The base support 10 is for example made of steel. As an alternative, the base support can be made of aluminum or granite or composite materials (i.e. a mixture of materials).

The base support 10 is configured to support the different elements comprised in the optical system 1. The support plate 12 of the base support 10 (and more particularly a front face 12A of the support plate 12) is adapted to receive the different elements comprised in the optical system 1. In other words, the different elements comprised in the optical system 1 are mounted on the front face 12A of the support plate 12.

As represented in Figure 1, the optical system 1 comprises a laser source 20. The laser source 20 is mounted on the front face 12A of the support plate 12 of the base support 10. The laser source 20 is configured to emit a laser beam in the optical system 1. The emitted laser beam thus propagates in the compartment 50.

The optical system 1 also comprises at least one optical component 30. The optical component 30 is also mounted on the front face 12A of the support plate 12 of the base support 10. The optical component 30 is configured to receive the laser beam emitted by the laser source 20 and interact with it (such as transmit or reflect it for example). The optical component 30 is for example a mirror, a lens, a prism or any other optical element that can be used to achieve the purpose of the optical system.

The optical system 1 can also comprise microscopes, metrological sensors (Z sensor, photodiodes, power meter) or mechanical actuators in order to perform adjustments.

Here, as visible in Figure 1, a protective part 15 is mounted on the edges of the support plate 12 of the base support 10. This protective part 15 extends perpendicularly (opposite to the floor) to the front face 12A of the support plate 12. This protective part 15 is configured to delimit a space in which the different elements are mounted on the support plate 12, preventing these elements from falling from the support plate 12 (and thus from the base support 10). This protective part 15 is for example here formed by metallic plates fixed to the support plate 12 and extending perpendicularly to the front face 12A of the support plate 12.

As an alternative, the protective part 15 can be omitted.

The optical system 1 also comprises a display and control unit 40 placed in the compartment 50. This display and control unit 40 allows controlling the different elements, such as the laser source 20 or the optical component 30, comprised in the optical system 1. The display and control unit 40 is also configured to display images (such as live images) from inside the compartment 50. This display and control unit 40 is also configured to display results of tests and operating parameters of the optical system 1. This is particularly useful during maintenance operations.

Here, the display and control unit 40 comprises a touch screen.

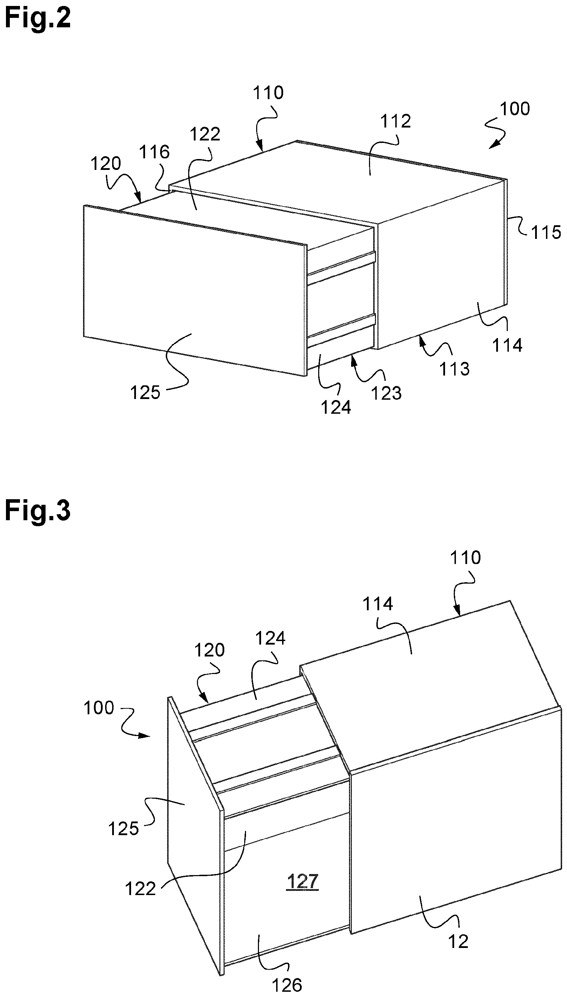

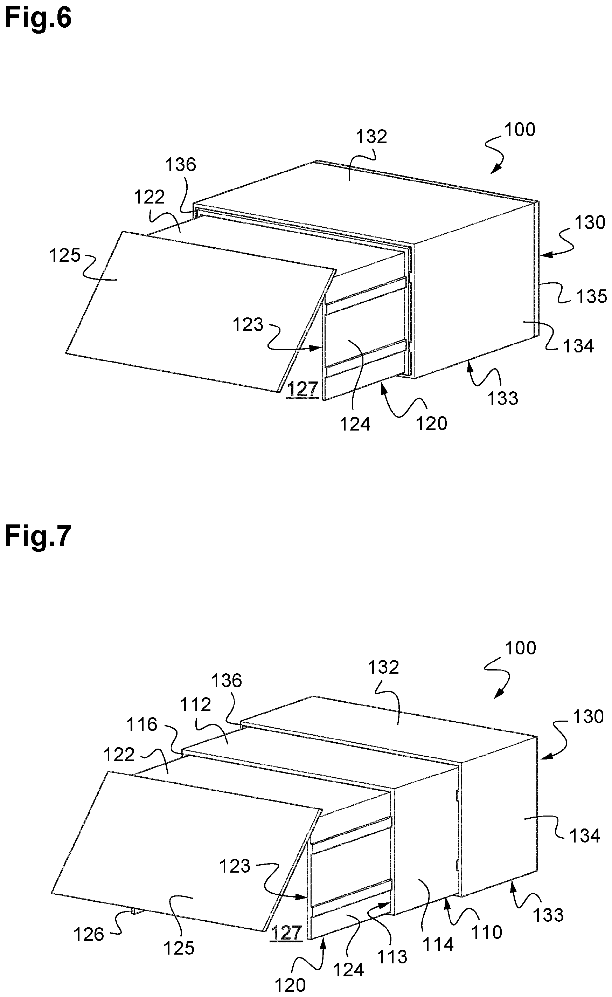

The present invention relates more particularly to the casing 100 and its specific structure. Figures 2 to 9 represent different embodiments of the casing 100 of the optical system 1. In the following, common elements of the different embodiments represented in Figures 2 to 9 are represented, if possible, by the same references and are described in a common way.

According to a first embodiment of the invention represented in Figures 2 to 4, the casing 100 comprises a first part 110 and a second part 120.

The first part 110 is fixed to the base support 10. It is for example screwed to the base support 10.

The first part 110 has a shape of an open parallelepiped. It comprises a first front wall 112 and a first side wall 113. The first front wall 112 faces the base support 10. The first side wall borders the first front wall 112.

Here, the first front wall 112 presents a rectangular shape, from the edges of which extends three portions 114, 115, 116 of the first side wall 113. More particularly, the portions 114, 115, 116 of the first side wall 113 extend from the first front wall 112 towards the base support 10. In other words, the portions 114, 115, 116 of the first side wall 113 extend from the first front wall 112 towards the floor.

The first front wall 112 and the first side wall 113 delimit the compartment 50 previously introduced.

Here, the two portions 114, 116 of the first side wall 113 are located opposite to each other whereas the other portion 115 of the first side wall 113 faces a portion 125 of a second side wall 123 of the second part 120 of the casing 100.

The first part 110 is for example made of a metallic material. It is for example made of steel. In practice, it is formed from the assembly of the first front wall 112 and the portions 114, 115, 116 of the first side wall 113. As an example, each portion 114, 115, 116 of the first side wall 113 is screwed to the first front wall 112 and screwed together. As an alternative, the first part can be formed in one piece using a molding process.

As represented in Figures 2 to 4, the second part 120 has also the shape of an open parallelepiped. The second part 120 extends parallel to the first part 110.

The second part 120 comprises a second front wall 122 and a second side wall 123. The second front wall 122 extends parallel to the first front wall 112. The second side wall 123 borders the second front wall 122.

Here, the second front wall 122 presents a rectangular shape, from the edges of which extends three portions 124, 125, 126 of the second side wall 123. More particularly, the portions 124, 125, 126 of the second side wall 123 extend from the second front wall 122 towards the base support 10. In other words, the portions 124, 125, 126 of the second side wall 123 extend from the second front wall 122 towards the floor.

As visible in Figures 2 to 4, the two portions 124, 126 of the second side wall 123 are located opposite to each other whereas the other portion 125 of the second side wall 123 faces the portion 115 of a first side wall 113 of the first part 110 of the casing 100. In other words, the portions 124, 126 of the second side wall 123 are arranged parallel to the portions 114, 116 of the first side wall 113.

The second part 120 is made of a metallic material. It is for example made of aluminum. In practice, the parts of the second part 120 (namely the second front wall 122 and the portions 124, 125, 126 of the second side wall 123) are for example aluminum sheets riveted together. As an alternative, the second part can be formed in one piece using a molding process.

Advantageously, as visible in Figure 3, the second part 120 comprises a first access opening 127. This first access opening 127 faces the second front wall 122. This first access opening 127 allows access to the inside of the optical system 1. In other words, the first access opening 127 enables accessing to the compartment 50 without requiring disassembly operations of the optical system 1. For example, an operator can use the first access opening 127 to get access to the compartment 50, and for example implement maintenance operations.

Here, the first access opening 127 extends parallel to the base support 10. Advantageously, this makes it possible to avoid an accidental leakage of the laser beam at eye level of a person who would be present in the vicinity of the optical system 1.

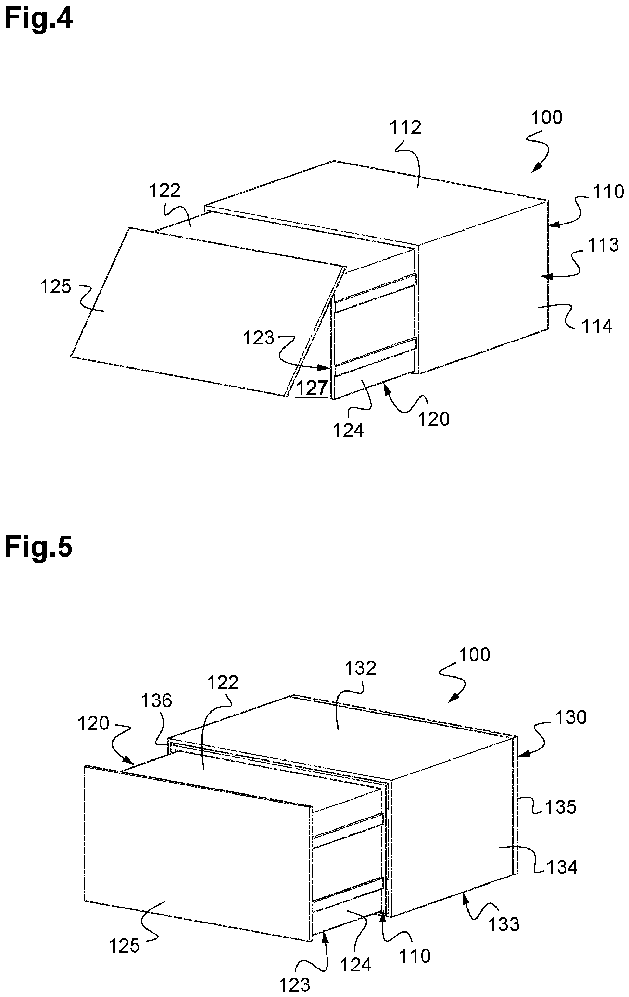

As visible in Figures 2 and 4, the portion 125 of the second side wall 123 is mounted movable with respect to the second front wall 122. This feature makes the access to the inside of the optical system 1 (and thus to the compartment 50) easier as the first access opening is enlarged. It also makes the exit from the inside of the optical system 1 easier and quicker.

More particularly here, the portion 125 of the second side wall 123 is mounted to the second front wall 122 by means of hinges, thus allowing the rotation of the portion 125 of the second side wall 123 with respect to the second front wall 122. **In** practice here, in order to avoid the leakage of the laser beam outside of the compartment 50 of the optical system and to limit the space required around the optical system 1, the hinges allow the rotation from a predetermined angle. This predetermined angle is for example comprised between 25 and 40 degrees. Thanks to the use of such hinges, the casing 100 (and the optical system 1) presents compactness qualities.

Optionally, magnets can be used to maintain the portion 125 of the second side wall 123 in a "closed" position (i.e. in which the portion 125 of the second side wall 123 is not rotated). More particularly, the edges of the portions 124, 126 of the second side wall 123 comprises first magnet elements which cooperate with complementary second magnet element provided on the portion 125 of the second side wall 123 in order to keep the portion 125 of the second side wall 123 in the closed position (meaning without rotating the hinges). **In** other words, if an operator wants to access inside the optical system 1, he/she needs to dissociate the second magnet elements from the first magnet elements.

Advantageously, the use of the magnets increases the secure operation of the optical system, preventing leakage of the laser beam outside of the casing 100 of the optical system 1.

According to a preferred embodiment of the present invention, the second part 120 is mounted movable with respect to the first part 110. More particularly, the second part 120 is mounted movable in translation, with respect to the first part 110, between an operating position and a maintenance position.

**In** the operating position, the second part 120 fits into the first part 110, in such a way that the access to the inside of the optical system 1 is not possible (the first access opening is not formed). **In** other words, the second part 120 has here smaller dimensions than those of the first part 110 in order to allow the arrangement of the second part 120 into the first part 110.

**In** this operating position, the compartment 50 is thus delimited by the second part 120 and the first part 110 (more particularly by the second front wall 122 and the second side wall 123 of the second part 120 and the portion 115 of the first side wall 113 of the first part 110). The laser beam propagates in such compartment 50.

In the maintenance position (represented in Figures 2 to 4), the second part 120 is slid away from the first part 110 (while remaining attached to the first part 110). In this maintenance position, as visible in Figure 3, the first access opening 127 is formed, thus allowing access to the compartment 50.

This arrangement reduces the overall bulk of the optical system 1 in operation and allows increasing the safety near the optical system 1 (as the first access opening is formed only when necessary, for example when maintenance is required).

In practice, in order to allow the translation of the second part 120 of the casing 100 with respect to the first part 110, the second part 120 is fixed to the first part 110 by means of at least one rail 117 (visible in Figure 1). The rail 117 thus allows the sliding movement of the second part 120 of the casing 100 with respect to the first part 110 between the operating position and the maintenance position (and vice-versa).

More particularly, the rail 117 comprises a first rail element (not represented) mounted on the first part 110 of the casing 100 and a complementary second rail element (namely the element 117) mounted on the second part 120 of the casing 100. The first rail element is for example mounted on an interior part of the first side wall 113 and the second rail element is for example mounted on an exterior part of the second side wall 123 (which faces the concerned interior part of the first side wall 113). The first rail element can be mounted on the interior part of the portions 114, 116 of the first side wall 113 of the first part 110. In such a case, the complementary second rail element is thus mounted on the concerned exterior part of the portions 124, 126 of the second side wall 123 of the second part 120 (facing the concerned portions 114, 116 of the first side wall 113 of the first part 110).

Preferentially, the casing 100 comprises two rails per side of the first part 110 and the second part 120 (meaning that in total, as represented in Figure 1, there are four rails 117 allowing the translation movement of the second part 120 with respect to the first part 110).

As an alternative, the second part can be fixedly mounted to the first part 110. In this case, the access opening is always present. In other words, in this alternative, the casing does not comprise the rails in order to allow the translation of the second part with respect to the first part.

As another alternative, the portion 125 of the second side wall 123 is fixedly mounted to the second front wall 122. In other words, in this alternative, the access opening is not enlarged. In other words, in this alternative, the casing does not comprise the hinges that allow the rotation of the portion 125 of the second side wall 123 with respect to the second front wall 122.

As another alternative, the portion 125 of the second side wall 123 of the second part 120 of the casing 100 can comprise a window (not represented). This window is made of a material transparent for visible wavelengths but absorbing the wavelengths associated with the laser beam. This window is for example made of acrylic material.

Advantageously, this window allows an operator, who is performing for example a maintenance of the optical system from inside, to ensure that it is safe to exit (for example that there is no one near the optical system if he/she wants to rotate the portion 125 of the second side wall of the second part 120).

As another alternative, the first part can be glued or welded or riveted to the base support.

As another alternative of the embodiments previously described, the other sides of the casing can be used to allow the arrangement in translation. For example, some other parts can be respectively mounted movable in translation from the portions 114, 116 in order to allow the access inside the optical system from these lateral sides of the optical system. In other words, the arrangement previously described can be arrangement on each side of the casing.

As another alternative, the translation of the second part of the casing with respect to the first part can be carried out with wheels or cylinders sliding in corresponding rails.

According to a second embodiment of the invention represented in Figures 5 to 9, the casing 100 comprises the first part 110, the second part 120 and a third part 130.

The first part 110 and the second part 130 are not described again here as they present the same characteristics of the ones described previously in the first embodiment.

The only difference relates to the first part 110, and particularly to the first side wall 113. In this second embodiment, the first side wall 113 only comprises two portions 114, 116. In other words, there is no portion 115 of the first side wall 113 in this embodiment. The first part 110 thus presents an inverted-U shape.

Only the third part 130 in described in detail in the following.

As represented in Figures 5 to 9, the third part 130 has also the shape of an open parallelepiped. The third part 130 extends parallel to the first part 110 of the casing 100.

The third part 130 comprises a third front wall 132 and a third side wall 133. The third front wall 132 extends parallel to the first front wall 112. The third side wall 133 borders the third front wall 132.

Here, the third front wall 132 presents a rectangular shape, from the edges of which extends three portions 134, 135, 136 of the second side wall 133. More particularly, the portions 134, 135, 136 of the third side wall 133 extend from the third front wall 132 towards the base support 10. In other words, the portions 134, 135, 136 of the third side wall 133 extend from the third front wall 132 towards the floor.

As visible in Figures 5 to 9, the two portions 134, 136 of the third side wall 133 are located opposite to each other whereas the other portion 135 of the third side wall 133 faces the portion 125 of a second side wall 123 of the second part 120 of the casing 100. In other words, the portions 134, 136 of the third side wall 133 are arranged parallel to the portions 114, 116 of the first side wall 113 (and thus parallel to the portions 124, 126 of the second side wall 123).

The third part 130 is made of a metallic material. It is for example made of aluminum. In practice, the parts of the third part 130 (namely the third front wall 132 and the portions 134, 135, 136 of the third side wall 133) are for example aluminum sheets riveted together. As an alternative, the third part can be formed in one piece using a molding process.

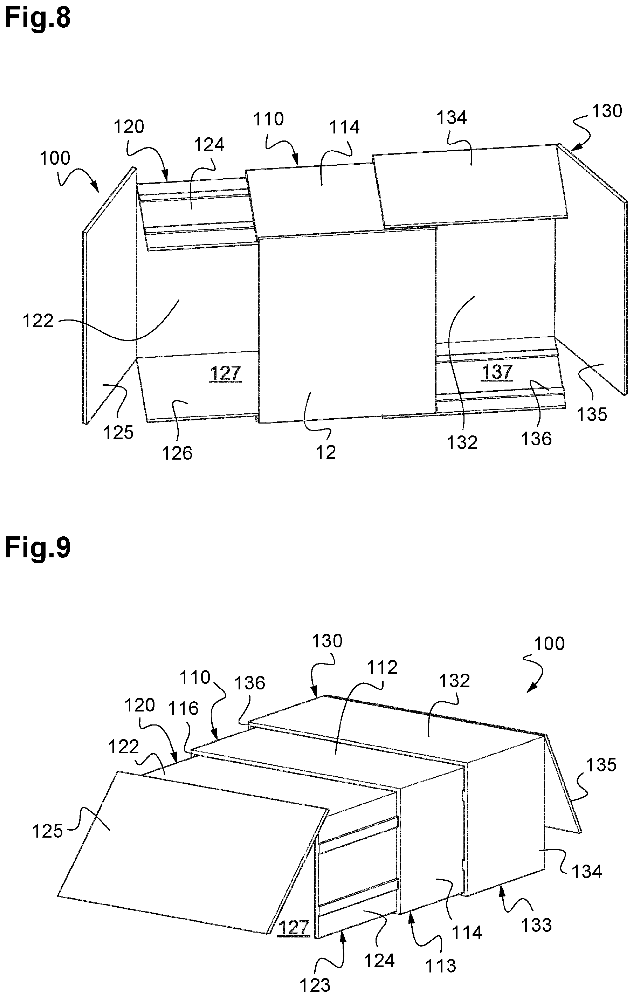

Advantageously, as visible in Figure 8, the third part 130 comprises a second access opening 137. This second access opening 137 faces the third front wall 132. This second access opening 137 allows access to the inside of the optical system 1. In other words, the second access opening 137 enables accessing to the compartment 50 without requiring disassembly operations of the optical system 1. For example, an operator can use the second access opening 137 to get access to the compartment 50, and for example implement maintenance operations.

Here, the second access opening 137 extends parallel to the base support 10. Advantageously, this makes it possible to avoid an accidental leakage of the laser beam at eye level of a person who would be present in the vicinity of the optical system.

Advantageously in this second embodiment, an operator can access inside the optical system 1 through the first access opening 127 and the second access opening 137. This is particularly useful as two people can access inside the optical system simultaneously if required.

As visible in Figures 5 and 9, the portion 135 of the third side wall 133 is mounted movable with respect to the third front wall 132. This feature makes the access to the inside of the optical system 1 (and thus to the compartment 50) easier as the second access opening is enlarged. It also makes the exit from the inside of the optical system 1 easier and quicker.

More particularly here, the portion 135 of the third side wall 133 is mounted to the third front wall 132 by means of hinges, thus allowing the rotation of the portion 135 of the third side wall 133 with respect to the third front wall 132. In practice here, in order to avoid the leakage of the laser beam outside of the compartment 50 of the optical system and to limit the space required around the optical system 1, the hinges allow the rotation from a predetermined angle. This predetermined angle is for example comprised between 25 and 40 degrees. Thanks to the use of such hinges, the casing 100 (and the optical system 1) presents compactness qualities.

Optionally, magnets can be used to maintain the portion 135 of the third side wall 133 in a "closed" position (i.e. in which the portion 135 of the third side wall 133 is not rotated). More particularly, the edges of the portions 134, 136 of the third side wall 133 comprises first magnet elements which cooperate with complementary second magnet element provided on the portion 135 of the third side wall 133 in order to keep the portion 135 of the third side wall 133 in the closed position (meaning without rotating the hinges). In other words, if an operator wants to access inside the optical system 1, he/she needs to dissociate the second magnet elements from the first magnet elements.

Advantageously, the use of the magnets increases the secure operation of the optical system, preventing leakage of the laser beam outside of the casing 100 of the optical system 1.

According to a preferred embodiment of the present invention, the third part 130 is mounted movable with respect to the first part 110. More particularly, the third part 130 is mounted movable in translation, with respect to the first part 110, between an operating position and a maintenance position.

In the operating position, the third part 130 is arranged such that the first part 110 fits into the third part 130. According to this arrangement, the access to the inside of the optical system 1 is not possible from the third part 130 (the other access opening is not formed). In other words, the first part 110 has here smaller dimensions than those of the third part 130 in order to allow the arrangement of the first part 110 into the third part 130 (by moving the third part 130).

In this operating position, the compartment 50 is thus delimited by the second part 120 and the third part 130 (more particularly by the second front wall 122 and the second side wall 123 of the second part 120 and the portion 135 of the third side wall 133 of the third part 130). The laser beam propagates in such compartment 50.

In the maintenance position (represented in Figures 5 to 9), the third part 130 is slid away from the first part 110 (while remaining attached to the first part 110). In this maintenance position, as visible in Figure 8, the second access opening 137 is formed, thus allowing access to the compartment 50.

This arrangement reduces the overall bulk of the optical system 1 in operation and allows increasing the safety near the optical system 1 (as the access opening is formed only when necessary, for example when maintenance is required).

In practice, in order to allow the translation of the third part 130 of the casing 100 with respect to the first part 110, the third part 130 is fixed to the first part 110 by means of at least one rail 118 (visible in Figure 1). The rail 118 thus allows the sliding movement of the third part 130 of the casing with respect to the first part 110 between the operating position and the maintenance position (and vice-versa).

More particularly, the rail 118 comprises a third rail element (not represented) mounted on the third part 130 of the casing 100 and a corresponding fourth rail element (namely the element 118) mounted on the first part 110 of the casing 100. The third rail element is for example mounted on an interior part of the third side wall 133 and the fourth rail element is for example mounted on an exterior part of the first side wall 113. The third rail element can be mounted on the interior part of the portions 134, 136 of the third side wall 133 of the third part 130. In such a case, the corresponding fourth rail element is thus mounted on the exterior part of the portions 114, 116 of the first side wall 113 of the first part 110.

Preferentially, the optical element 1 comprises two rails per side of the first part 110 and the third part 130 (meaning that in total there are four rails allowing the translation movement of the third part 130 with respect to the first part 110).

It should be noted that, in this second embodiment, the maintenance position corresponds also to the translation of the second part 120 of the casing 100. In other words, an operator can access inside the optical system by the first access opening 127 and/or the second access opening 137.

As an alternative, the third part can be fixedly mounted to the first part. In this case, the second access opening is always present. In other words, in this alternative, the casing does not comprise the rails in order to allow the translation of the third part with respect to the first part.

As another alternative of the embodiments previously described, the other sides of the casing can be used to allow the arrangement in translation. For example, some other parts can be respectively mounted movable in translation from the portions 114, 116 in order to allow the access inside the optical system from these lateral sides of the optical system. In other words, the arrangement previously described can be arrangement on each side of the casing.

As another alternative, the translation of the third part of the casing with respect to the first part can be carried out with wheels or cylinders sliding in corresponding rails.

As another alternative, the portion 135 of the third side wall 133 is fixedly mounted to the third front wall 132. In other words, in this alternative, the second access opening is not enlarged. In other words, in this alternative, the casing does not comprise the hinges that allow the rotation of the portion 125 of the second side wall 123 with respect to the second front wall 122.

As another alternative, the portion 135 of the third side wall 133 of the third part 130 of the casing 100 can comprise another window (not represented). This other window is made of a material transparent for visible wavelengths but absorbing the wavelengths associated with the laser beam. This other window is for example made of acrylic material.

Advantageously, this other window allows an operator, who is performing for example a maintenance of the optical system from inside, to ensure that it is safe to exit (for example that there is no one near the optical system if he/she wants to rotate the portion 135 of the third side wall of the third part 130).

According to a third embodiment (not represented), the third part can be mounted movable with respect to the second part (instead of the first part). In this case, the third part has here smaller dimensions than those of the second part in order to allow the arrangement of the third part into the second part. More particularly, the third part is mounted movable in translation, with respect to the second part, between an operating position and a maintenance position (as described previously).

In practice, in order to allow the translation of the third part of the casing with respect to the second part, the third part is fixed to the second part by means of at least one rail. The rail thus allows the sliding movement of the third part of the casing with respect to the second part between the operating position and the maintenance position (and vice-versa).

As an alternative of the three embodiments previously presented, the different parts of the casing can have a shape other than parallelepipedal.

Finally, thanks to the specific structure of the casing according to the invention, the maintenance operations can be performed in complete safety, even if the optical system comprises a laser source. Indeed, thanks to the access openings, it is possible to easily access inside the optical system in order to perform tests and maintenance operations without exposing people present near the optical system.

Furthermore, thanks to the interlocking structure of the casing, the optical system is particularly compact. In other words, the compactness of the optical system is ensured thanks to the telescopic nature of the casing, the different parts of the casinf fitting and sliding into each other.

Finally, the installation of the display and control unit in the optical system makes maintenance operations easier as there is no need to exit the optical system in order to ensure the proper running of the maintenance operations and be able to immediately detect and correct possible problems.

## Claims

1. Optical system (1) comprising:
- a base support (10),
- a laser source (20) emitting a laser beam, said laser source (20) being mounted on the base support (10),
- at least one optical component (30) mounted on the base support (10) and receiving the laser beam, and
- a casing (100) comprising a first part (110) and a second part (120), said first part (110) being fixed to the base support (10), the first part (110) comprising a first front wall (112) bordered by a portion (114, 115, 116) of a first side wall (113), the first front wall (112) facing a support plate (12) of the base support (10), the second part (120) comprising a second front wall (122) bordered by a portion (124, 125, 126) of a second side wall (123), the second front wall (122) extending parallel to the first front wall (112), the portion (124, 126) of the second side wall (123) being arranged in the extension of the portion (114, 116) of the first side wall (113),
the first part (110) delimiting a compartment in which the laser beam propagates, the second part (120) comprising an access opening (127) facing the second front wall (122), said access opening (127) being arranged in order to allow access to the compartment (50),
wherein the second part (120) of the casing (100) is fixed to the first part (110) by means of rails (117) so as to allow a sliding movement of the second part (120) with respect to the first part (110) between an operating position, in which said access to the compartment (50) is not possible, and a maintenance position, in which said access to the compartment (50) is allowed.

2. Optical system (1) according to claim 1, wherein the access opening (127) extends parallel to the support plate (12) of the base support (10).

3. Optical system (1) according to claim 1 or 2, wherein the second part (120) is mounted movable with respect to the first part (110).

4. Optical system (1) according to any of claims 1 to 3, comprising a display and control unit (40) placed in the compartment (50).

5. Optical system (1) according to any of claims 1 to 4, wherein another portion (125) of the second side wall (123) is mounted on the second front wall (122) by means of hinges in order to allow the rotation of the other portion (125) of the second side wall (123) from a predetermined angle.

6. Optical system (1) according to claim 5, wherein the predetermined angle is comprised between 25 and 40 degrees.

7. Optical system (1) according to any of claims 1 to 6, wherein the first part (110) is made of steel.

8. Optical system (1) according to any of claims 1 to 7, wherein the second part (120) is made of aluminum.

9. Optical system (1) according to any of claims 1 to 8, wherein the casing (100) comprises a third part (130) comprising a third front wall (132) bordered by a portion (134, 135, 136) of a third side wall (133), the third front wall (132) extending parallel to the first front wall (112), the portion (134, 136) of the third side wall (133) being arranged in the extension of the portion (114, 116) of the first side wall (113), the third part (130) also delimiting said compartment (50),
the third part (130) comprising another access opening (137) facing the third front wall (132), said other access opening (137) being arranged in order to allow access to the compartment (50).

10. Optical system (1) according to claim 9, wherein the third part (130) is mounted movable with respect to the first part (110).

11. Optical system (1) according to claim 10, wherein the third part (130) of the casing (100) is fixed to the first part (110) by means of rails (118) so as to allows a sliding movement of the third part (130) with respect to the first part (110).

12. Optical system (1) according to claim 9, wherein the third part is mounted movable with respect to the second part.

13. Optical system (1) according to claim 12, wherein the third part of the casing is fixed to the second part by means of rails so as to allows a sliding movement of the third part with respect to the second part.

14. Optical system (1) according to any of claims 9 to 13, wherein the third part (130) is made of aluminum.

## Patentansprüche

1. Optisches System (1) mit:
- einem Grundträger (10),
- einer einen Laserstrahl aussendenden Laserquelle (20), wobei die Laserquelle (20) an dem Grundträger (10) befestigt ist,
- mindestens einem an dem Grundträger (10) befestigten und den Laserstrahl empfangenden optischen Bauelement (30) und
- einem einen ersten Teil (110) und einen zweiten Teil (120) aufweisenden Gehäuse (100), wobei der erste Teil (110) am Grundträger (10) befestigt ist, wobei der erste Teil (110) eine von einem Teil (114, 115, 116) einer ersten Seitenwand (113) begrenzte erste Vorderwand (112) aufweist, wobei die erste Vorderwand (112) einer Trägerplatte (12) des Grundträgers (10) gegenüberliegt, wobei der zweite Teil (120) eine von einem Teil (124, 125, 126) einer zweiten Seitenwand (123) begrenzte zweite Vorderwand (122) aufweist, wobei sich die zweite Vorderwand (122) parallel zur ersten Vorderwand (112) erstreckt, wobei der Teil (124, 126) der zweiten Seitenwand (123) in Verlängerung des Teils (114, 116) der ersten Seitenwand (113) angeordnet ist,
wobei der erste Teil (110) ein Abteil begrenzt, in dem sich der Laserstrahl ausbreitet, wobei der zweite Teil (120) eine Zugangsöffnung (127) aufweist, die der zweiten Vorderwand (122) gegenüberliegt, wobei die Zugangsöffnung (127) so angeordnet ist, daß ein Zugang zum Abteil (50) möglich ist,
wobei der zweite Teil (120) des Gehäuses (100) mittels Schienen (117) am ersten Teil (110) befestigt ist, um eine Gleitbewegung des zweiten Teils (120) gegenüber dem ersten Teil (110) zwischen einer Betriebsstellung, in der kein Zugang zum Abteil (50) möglich ist, und einer Wartungsstellung, in der Zugang zum Abteil (50) möglich ist, zu ermöglichen.

2. Optisches System (1) gemäß Anspruch 1, bei dem sich die Zugangsöffnung (127) parallel zur Trägerplatte (12) des Grundträgers (10) erstreckt.

3. Optisches System (1) gemäß Anspruch 1 oder 2, bei dem der zweite Teil (120) gegenüber dem ersten Teil (110) beweglich angebracht ist.

4. Optisches System (1) gemäß einem der Ansprüche 1 bis 3, mit einer im Abteil (50) angeordneten Anzeige- und Steuereinheit (40).

5. Optisches System (1) gemäß einem der Ansprüche 1 bis 4, bei dem ein weiterer Teil (125) der zweiten Seitenwand (123) mit Scharnieren an der zweiten Vorderwand (122) befestigt ist, um die Drehung des weiteren Teils (125) der zweiten Seitenwand (123) um einen vorbestimmten Winkel zu ermöglichen.

6. Optisches System (1) gemäß Anspruch 5, bei dem der vorbestimmte Winkel zwischen 25 und 40 Grad beträgt.

7. Optisches System (1) gemäß einem der Ansprüche 1 bis 6, bei dem der erste Teil (110) aus Stahl gefertigt ist.

8. Optisches System (1) gemäß einem der Ansprüche 1 bis 7, bei dem der zweite Teil (120) aus Aluminium gefertigt ist.

9. Optisches System (1) gemäß einem der Ansprüche 1 bis 8, bei dem das Gehäuse (100) einen dritten Teil (130) mit einer durch einen Teil (134, 135, 136) einer dritten Seitenwand (133) begrenzten dritten Vorderwand (132) aufweist, wobei sich die dritte Vorderwand (132) parallel zur ersten Vorderwand (112) erstreckt, wobei der Teil (134, 136) der dritten Seitenwand (133) in Verlängerung des Teils (114, 116) der ersten Seitenwand (113) angeordnet ist, wobei der dritte Teil (130) auch das Abteil (50) begrenzt,
wobei der dritte Teil (130) eine der dritten Vorderwand (132) gegenüberliegende weitere Zugangsöffnung (137) aufweist, wobei die weitere Zugangsöffnung (137) so angeordnet ist, daß ein Zugang zum Abteil (50) möglich ist.

10. Optisches System (1) gemäß Anspruch 9, bei dem der dritte Teil (130) gegenüber dem ersten Teil (110) beweglich angebracht ist.

11. Optisches System (1) gemäß Anspruch 10, bei dem der dritte Teil (130) des Gehäuses (100) mittels Schienen (118) am ersten Teil (110) befestigt ist, um eine Gleitbewegung des dritten Teils (130) gegenüber dem ersten Teil (110) zu ermöglichen.

12. Optisches System (1) gemäß Anspruch 9, bei dem der dritte Teil gegenüber dem zweiten Teil beweglich angebracht ist.

13. Optisches System (1) gemäß Anspruch 12, bei dem der dritte Teil des Gehäuses mittels Schienen am zweiten Teil befestigt ist, um eine Gleitbewegung des dritten Teils gegenüber dem zweiten Teil zu ermöglichen.

14. Optisches System (1) gemäß einem der Ansprüche 9 bis 13, bei dem der dritte Teil (130) aus Aluminium gefertigt ist.

## Revendications

1. Système optique (1) comprenant :
- un support de base (10),
- une source laser (20) émettant un rayon laser, la source laser (20) étant montée sur le support de base (10),
- au moins un composant optique (30) monté sur le support de base (10) et recevant le rayon laser, et
- un boîtier (100) comprenant une première partie (110) et une deuxième partie (120), la première partie (110) étant fixée au support de base (10), la première partie (110) comprenant une première paroi avant (112) délimitée par une partie (114, 115, 116) d'une première paroi latérale (113), la première paroi avant (112) étant en regard d'une plaque de support (12) du support de base (10), la deuxième partie (120) comprenant une deuxième paroi avant (122) délimitée par une partie (124, 125, 126) d'une deuxième paroi latérale (123), la deuxième paroi avant (122) s'étendant parallèlement à la première paroi avant (112), la partie (124, 126) de la deuxième paroi latérale (123) étant agencée en prolongation de la partie (114, 116) de la première paroi latérale (113),
la première partie (110) délimitant un compartiment dans lequel le rayon laser se propage, la deuxième partie 120) comprenant une ouverture d'accès (127) en regard de la deuxième paroi latérale (122), ladite ouverture d'accès (127) étant agencée de façon à rendre possible un accès au compartiment (50),
la deuxième partie (120) du boîtier (100) étant fixée à la première partie (110) moyennant des rails (117) afin de permettre un mouvement coulissant de la deuxième partie (120) par rapport à la première partie (110) entre une position de fonctionnement dans laquelle un accès au compartiment (50) n'est pas possible et une position de maintenance dans laquelle un accès au compartiment (50) est possible.

2. Système optique (1), selon la revendication 1, l'ouverture d'accès (127) s'étendant parallèlement au support de base (10).

3. Système optique (1), selon la revendication 1 ou 2, la deuxième partie (120) étant montée mobile par rapport à la première partie (110).

4. Système optique (1) selon l'une des revendications 1 à 3, comprenant une unité d'affichage et de commande (40) placée dans le compartiment (50).

5. Système optique (1) selon l'une des revendications 1 à 4, une autre partie (125) de la deuxième paroi latérale (123) étant fixée à la deuxième paroi avant (122) moyennant des charnières afin de rendre possible la rotation de ladite autre partie (125) de la deuxième paroi latérale (123) d'un angle prédéterminé.

6. Système optique (1) selon la revendication 5, l'angle prédéterminé étant compris entre 25 et 40 degrés.

7. Système optique (1) selon l'une des revendications 1 à 6, la première partie (110) étant faite en acier.

8. Système optique (1) selon l'une des revendications 1 à 7, la deuxième partie (120) étant faite en aluminium.

9. Système optique (1) selon l'une des revendications 1 à 8, le boîtier (100) comprenant une troisième partie (130) comportant une troisième paroi avant (132) délimitée par une partie (134, 135, 136) d'une troisième paroi latérale (133), la troisième paroi avant (132) s'étendant parallèlement à la première paroi avant (112), la partie (134, 136) de la troisième paroi latérale (133) étant agencée en prolongation de la partie (114, 116) de la première paroi latérale (113), la troisième partie (130) délimitant aussi ledit compartiment (50),
la troisième partie (130) comprenant une autre ouverture d'accès (137) en regard de la troisième paroi avant (132), ladite ouverture d'accès (137) étant agencée afin de permettre un accès au compartiment (50).

10. Système optique (1) selon la revendication 9, la troisième partie (130) étant montée mobile par rapport à la première partie (110).

11. Système optique (1) selon la revendication 10, la troisième partie (130) du boîtier (100) étant fixée à la première partie (110) moyennant des rails (118) afin de permettre un mouvement coulissant de la troisième partie (130) par rapport à la première partie (110).

12. Système optique (1) selon la revendication 9, la troisième partie étant montée mobile par rapport à la deuxième partie.

13. Système optique (1) selon la revendication 12, la troisième partie du boîtier étant fixée à la deuxième partie moyennant des rails afin de permettre un mouvement coulissant de la troisième partie par rapport à la deuxième partie.

14. Système optique (1) selon l'une des revendications 9 à 13, la troisième partie (130) étant faite en aluminium.
